# EUROPÄISCHE PATENTSCHRIFT

(11) **EP 3 300 019 B1**
(45) Veröffentlichungstag und Bekanntmachung des Hinweises auf die Patenterteilung: **16.08.2023**
(21) Anmeldenummer: 17171193.0
(22) Anmeldetag: 16.05.2017
(51) Int. Cl.: G06T 7/00, G06T 7/269, A01D 41/127

(54) **GUTFLUSSÜBERWACHUNG EINER ERNTEGUTAUFNAHMEVORRICHTUNG**
MONITORING OF THE FLOW OF GOODS OF A CROP COLLECTING DEVICE
SURVEILLANCE D'ÉCOULEMENT DE PRODUIT DANS UN DISPOSITIF DE COLLECTE DE RÉCOLTE

(30) Priorität: 27.09.2016 DE 102016118244
(43) Veröffentlichungstag der Anmeldung: 28.03.2018
(73) Patentinhaber: CLAAS Selbstfahrende Erntemaschinen GmbH, 33428 Harsewinkel (DE)
(72) Erfinder: Neitemeier, Dennis, 59510 Lippetal (DE); Krause, Thilo, 39249 Glinde (DE); Nienhaus, Andreas, 48155 Münster (DE); Skiba, Andreas, 33647 Bielefeld (DE); Kettelhoit, Boris, 33335 Gütersloh (DE)
(74) Vertreter: CLAAS Gruppe

(56) Entgegenhaltungen:
- EP-A1- 3 150 047
- DE-A1-102008 032 191
- TAMGADE S N ET AL: "Motion Vector Estimation of Video Image by Pyramidal Implementation of Lucas Kanade Optical Flow", EMERGING TRENDS IN ENGINEERING AND TECHNOLOGY (ICETET), 2009 2ND INTERNATIONAL CONFERENCE ON, IEEE, PISCATAWAY, NJ, USA, 16. Dezember 2009 (2009-12-16), Seiten 914-917, XP031616799, ISBN: 978-1-4244-5250-7
- James Schnaider: "Modeling of the power requirement and crop flow for a disc mower", , 1. Dezember 2009 (2009-12-01), Seite i-13,1-110, XP055411469, Gefunden im Internet: URL:https://ecommons.usask.ca/bitstream/ha ndle/10388/etd-01272010-182753/ThesisFixed .pdf?sequence=1&isAllowed=y [gefunden am 2017-09-29]
- ENKELMANN ET AL: "Obstacle detection by evaluation of optical flow fields from image sequences", IMAGE AND VISION COMPUTING, ELSEVIER, GUILDFORD, GB, Bd. 9, Nr. 3, 1. Juni 1991 (1991-06-01), Seiten 160-168, XP024237949, ISSN: 0262-8856, DOI: 10.1016/0262-8856(91)90010-M [gefunden am 1991-06-01]

## Beschreibung

Die vorliegende Erfindung betrifft eine landwirtschaftliche Arbeitsmaschine gemäß dem Oberbegriff des Anspruchs 1.

Die Erfindung betrifft eine landwirtschaftliche Arbeitsmaschine, insbesondere eine selbstfahrende Erntemaschine, mit einer Erntegutbergungsvorrichtung, die eine Erntegutschneidvorrichtung, eine Erntegutaufnahmevorrichtung und/oder eine Ernteguteinzugsvorrichtung, und zumindest eine Erntegutfördervorrichtung aufweist, und ein Bildverarbeitungssystem, eine Datenausgabeeinheit, und mindestens ein der Erntegutbergungsvorrichtung zugeordnetes Sensorsystem zur Erfassung eines Erntegutflusses in der Erntegutbergungsvorrichtung umfassend, wobei das Sensorsystem zur Übertragung von den Bildern an das Bildverarbeitungssystem gekoppelt ist, wobei die von dem Sensorsystem generierten Bilder an das Bildverarbeitungssystem übergeben werden, wobei das Bildverarbeitungssystem eine Auswahl verfügbarer Bilder verarbeitet.

Aus der Praxis sind als Mähdrescher ausgebildete selbstfahrende Erntemaschinen mit auf das jeweilige Erntegut abgestimmten Erntegutbergungsvorrichtungen hinlänglich bekannt. Trotz eine Mehrzahl von automatischen Einstellungen der Erntegutbergungsvorrichtungen wie beispielsweise Schnitthöhe, Haspelposition und Messerbalkenposition muss der Fahrzeugführer des Mähdreschers dauerhaft den Erntegutfluss innerhalb der Erntegutbergungsvorrichtung visuell überwachen. Er muss beispielsweise darauf achten, dass eine gleichmäßige Gutflussgeschwindigkeit innerhalb der Erntegutbergungsvorrichtung vorhanden ist, da bei einem ungleichmäßigen Erntegutfluss eventuell die Fahrzeuggeschwindigkeit und damit eine Erntegutaufnahme reduziert werden muss, um Gutstaus zu vermeiden. Tritt ein Gutstau, das heißt eine Blockade des Erntegutflusses, auf, muss der Erntevorgang abgebrochen und eine aufwändige Beseitigung des Gutstaus vorgenommen werden. Die hierfür erforderliche Zeit beeinträchtigt die Wirtschaftlichkeit des Erntebetriebes signifikant. Ein Problem bei der Vermeidung eines Gutstaus ist, dass erst ein vollständig ausgebildeter visuell deutlich erkennbar ist, es dann aber für eine Korrektur des Betriebs der Erntegutbergungsanordnung häufig schon zu spät ist. Deshalb ist eine genaue Überwachung des Erntegutflusses sinnvoll, um einen sich anbahnenden Gutstau frühzeitig zu erkennen.

Die Offenlegungsschrift DE 10 2008 032 191 A1, welche vorliegend als nächstkommend angesehen wird, beschreibt dazu eine selbstfahrende Erntemaschine mit einer Sensoreinheit zur Überwachung des Erntegutstroms innerhalb einer Erntegutbergungsvorrichtung der Erntemaschine. Speziell ist eine Kamera vorgesehen, welche Bilder des Erntegutstroms erstellt. Diese Bilder werden einem Bewegungsunschärfeverfahren oder einem Bildvergleichsverfahren unterzogen. Beim Bewegungsunschärfeverfahren werden durch Einstellung der Belichtungszeiten der Kameras Unregelmäßigkeiten im Erntegutfluss mittels der Abbildungsschärfe erfasst. Nachteilig an diesem Ansatz ist, dass eine maschinelle Auswertung dieser Bilddaten zur automatischen Steuerung und Regelung der Erntemaschine schwierig ist. Zudem hängt die genaue Erfassung von Unregelmäßigkeiten in Erntegutfluss stark von der Voreinstellung der Belichtungszeit ab. Beim vorgeschlagenen Bildvergleichsverfahren werden Verschiebungen von Erntegutmerkmalen von Bild zu Bild erfasst und Rückschlüsse auf Erntegutflussprobleme gezogen. Dies erfordert jedoch eine aufwendige Erkennung von Erntegutmerkmalen aus dem Bild und gegebenenfalls ein vorheriges Trainieren des Verfahrens. Auch geht aus der Druckschrift nicht hervor, welche Erntegutmerkmale erfasst werden sollen.

Vor diesem Hintergrund besteht die Aufgabe der vorliegenden Erfindung darin, die aus dem Stand der Technik bekannte Überwachung des Erntegutflusses hinsichtlich der Genauigkeit, Zuverlässigkeit und Rechtzeitigkeit weiterzuentwickeln und zu verbessern.

Die Aufgabe wird gelöst mit einer landwirtschaftlichen Arbeitsmaschine mit den Merkmalen des unabhängigen Patentanspruchs 1. Vorteilhafte Ausführungsformen sind den abhängigen Ansprüchen entnehmbar.

Indem eine landwirtschaftliche Arbeitsmaschine, insbesondere eine selbstfahrende Erntemaschine, mit einer Erntegutbergungsvorrichtung, die eine Erntegutschneidvorrichtung, eine Erntegutaufnahmevorrichtung und/oder eine Ernteguteinzugsvorrichtung, und zumindest eine Erntegutfördervorrichtung aufweist, und ein Bildverarbeitungssystem, eine Datenausgabeeinheit, und mindestens ein der Erntegutbergungsvorrichtung zugeordnetes Sensorsystem zur Erfassung eines Erntegutflusses in der Erntegutbergungsvorrichtung umfassend, wobei das Sensorsystem zur Übertragung von den Bildern an das Bildverarbeitungssystem gekoppelt ist, wobei die von dem Sensorsystem generierten Bilder an das Bildverarbeitungssystem übergeben werden, wobei das Bildverarbeitungssystem eine Auswahl verfügbarer Bilder verarbeitet, wobei das Bildverarbeitungssystem die übertragenden Bilder in einem ersten Schritt vorverarbeitet, in einem weiteren Schritt aus den vorverarbeiteten Bildern einen optischen Fluss und korrespondierende Vektorfelder ermittelt, und in einem folgenden Schritt aus den korrespondierenden Vektorfeldern Gutflussgeschwindigkeitsverläufe des Erntegutflusses ableitet und bewertet, wird sichergestellt, dass auftretende Veränderungen im Erntegutfluss frühzeitig detektiert werden. Insbesondere können anbahnende Gutstaus in der Erntegutbergungsvorrichtung frühzeitig erkannt werden. Entscheidend ist die Erkenntnis, dass einem Gutstau in der Regel eine Reduktion der Gutflussgeschwindigkeit in der Erntegutbergungsvorrichtung vorangeht. Die Bestimmung des optischen Flusses ermöglicht im Wesentlichen eine detaillierte, kontinuierliche und flächendeckende Bestimmung von örtlich hochaufgelösten Gutflussgeschwindigkeiten in der Erntegutbergungsvorrichtung. Eine rechenaufwendige Identifizierung von Strukturen, Objekten oder Erntegutmerkmalen ist nicht erforderlich. Durch die Vorverarbeitung der Bilder werden die Zuverlässigkeit und die Geschwindigkeit der Bildverarbeitung weiter erhöht. Des Weiteren werden durch die Ermittlung der Gutflussgeschwindigkeitsverläufe eine Steuerung der Erntegutbergungsvorrichtung und/oder eine Überwachung des Erntegutflusses für den Fahrzeugführer vereinfacht.

In einer vorteilhaften Ausgestaltung der Erfindung umfasst das zumindest eine Sensorsystem eine Kamera, wobei die Kamera insbesondere als eine Monochromkamera und/oder Farbkamera ausgebildet ist. Dadurch können die Bilder, insbesondere einer Bildsequenz, auf einfache Weise und mit einer hohen Bildauflösung erzeugt werden.

Damit unter anderem dem Bildverarbeitungssystem Referenzgeschwindigkeiten zum Abgleich zur Verfügung stehen, ist in einer vorteilhaften Ausgestaltung der Erfindung vorgesehen, dass die Bilder von der Erntegutbergungsvorrichtung auch das angrenzende Umfeld erfassen, wobei das angrenzende Umfeld insbesondere einen Feldbereich in Fahrtrichtung vor der Erntegutbergungsvorrichtung und/oder einen Feldbereich in Fahrtrichtung hinter der Erntegutbergungsvorrichtung umfasst.

Auf technisch einfache und kostengünstige Weise lässt sich das Bildverarbeitungssystem umsetzen, wenn das Bildverarbeitungssystem eine, insbesondere der landwirtschaftlichen Arbeitsmaschine zugeordnete, elektronische Recheneinheit ist, die Bilder und/oder Bilddaten, die aus den Bildern abgeleitet sind, elektronisch verarbeitet und auswertet.

In einer vorteilhaften Ausgestaltung der Erfindung lassen sich der optische Fluss und die korrespondierenden Vektorfelder auf einfache Weise ermitteln, indem jeweils zwei, insbesondere zwei aufeinanderfolgende, Bilder einer Bildsequenz zu einem Bildpaar gruppierbar sind, eine Zeit zwischen den Bildern des jeweiligen Bildpaares erfasst wird und/oder vorgegeben ist, und jedes Bild Intensitätsmuster aufweist.

Damit die Bilder vom Bildverarbeitungssystem schnell und zuverlässig verarbeitet werden können, umfasst in dem ersten Schritt das Vorverarbeiten der Bilder eine Intensitätsnormierung, eine Rauschreduktion, eine Schattenausblendung, eine Bildstabilisierung und/oder eine Bildrotation. Durch die Intensitätsnormierung wird vorzugsweise der Dynamikumfang erhöht und der Kontrast der Bilder verbessert. Durch die Rauschreduktion wird insbesondere der Staub, der beim Ernten entsteht, aus den Bildern herausgefiltert und somit eine Verfälschung des abgebildeten Erntegutflusses reduziert. Durch die Schattenausblendung werden vorzugsweise großflächige Bereiche mit im Wesentlichen einheitlichen Intensitäten, wie zum Beispiel Schatten, aus der folgenden Bildverarbeitung ausgeblendet, wobei Texturen des Bildes im Wesentlichen erhalten bleiben. Mittels der Bildstabilisierung können Vibrationen und Schwingungen der Fahrzeugkabine und/oder der landwirtschaftlichen Arbeitsmaschine ausgeglichen werden, wodurch der Bildausschnitt stabilisiert wird. Durch eine optionale Bildrotation wird das Bild zur Fahrtrichtung und/oder anhand von markanten Kanten neu ausgerichtet, wodurch der Bildbereich leichter bearbeitbar wird.

In dem weiteren Schritt werden zur Ermittlung des optischen Flusses Positionsverschiebungen von den Intensitätsmustern zwischen den Bildern mindestens eines Bildpaares ermittelt, wobei die Positionsverschiebungen Verschiebungsbeträge und Verschiebungsrichtungen umfassen, und Verschiebungsbeträge und Verschiebungsrichtungen der Intensitätsmuster für jedes Bildpaar jeweils als Vektoren in dem korrespondierenden Vektorfeld, insbesondere in einer Matrix, des jeweiligen Bildpaares zusammengefasst werden. Hierdurch wird das Bildverarbeitungssystem vereinfacht und beschleunigt. Durch Nutzung von Intensitätsmustern erübrigt sich eine aufwendige Erfassung oder Identifikation von Bildmerkmalen/Objekten. Die Positionen der einzelnen Intensitäten in den Intensitätsmustern liefern für die Berechnung der Geschwindigkeiten nun die Bezugspunkte. Durch Erfassung der Verschiebungsbeträge und der Verschiebungsrichtungen und der Zusammenfassung dieser in Vektorfeldern kann dann auf einfache Weise die Gutflussgeschwindigkeit, vorzugsweise flächendeckend und mit hoher Auflösung, für den gesamten Erntegutfluss der Erntegutbergungsvorrichtung berechnet werden.

Damit der optische Fluss und die korrespondierenden Vektorfelder einfach und präzise berechnet werden können, ist in einer vorteilhaften Ausgestaltung der Erfindung vorgesehen, dass in dem weiteren Schritt der optische Fluss und die korrespondierenden Vektorfelder mittels einer differenziellen Methode berechnet werden, wobei bei der differenzielle Methode insbesondere durch Ableitung der Intensitätsmuster jedes Bildes jeweils eine Gradientenfunktion erzeugt wird, die Gradientenfunktionen beider Bilder des jeweiligen Bildpaares subtrahiert werden und eine resultierende Funktion die Verschiebungen der Intensitätsmuster für das korrespondierende Vektorfeld des Bildpaares wiedergibt.

Indem in dem weiteren Schritt die differentielle Methode eine Lucas-Kanade-Methode ist, bei der zusätzlich eine Gleichheit des optischen Flusses in einer lokalen Umgebung eines Pixels eines Bildes, für den der optische Fluss bestimmt wird, angenommen wird, wird in einer vorteilhaften Ausgestaltung die Robustheit gegenüber Rauschen und kleinen Defekten in den Bildern verbessert. Des Weiteren können mit dieser Methode Rotation, Größenskalierungen und Verdrehungen von Bildteilen berücksichtigt werden.

Indem in dem weiteren Schritt die Lucas-Kanade-Methode eine pyramidale Lucas-Kanade-Methode ist, bei der eine erste Bildauflösung der Bilder jedes Bildpaares zur Berechnung des optischen Flusses und der korrespondierenden Vektorfelder zu mindestens einer weiteren Bildauflösung reduziert wird und anschließend der optische Fluss und die korrespondierenden Vektorfelder berechnet und bei einer schrittweisen Wiederherstellung der ersten Bildauflösung iterativ korrigiert werden, wird in einer vorteilhaften Ausgestaltung die erforderliche Bildrate/Frame-Rate eines Bildsequenz, insbesondere eines Videos, gesenkt.

Damit die Geschwindigkeiten in jedem Bildpaar auf einfache Weise ermittelt und vorzugsweise dargestellt werden können, ist in einer bevorzugten Ausgestaltung vorgesehen, dass in dem folgenden Schritt Geschwindigkeiten in den Bildern, insbesondere die Gutflussgeschwindigkeiten in der Erntegutbergungsvorrichtung, aus den Verschiebungsbeträgen des korrespondierenden Vektorfeldes des jeweiligen Bildpaares und einer Zeit zwischen den Bildern der jeweiligen Bildpaare berechnet und als Gutflussgeschwindigkeitsverläufe, insbesondere die Gutflussgeschwindigkeitsverläufe des Erntegutflusses, dargestellt werden.

In einer vorteilhaften Ausgestaltung werden in dem folgenden Schritt Bildbereiche, die den Erntegutfluss darstellen, in Regionen eingeteilt und jeweils eine gemittelte Gutflussgeschwindigkeit für jede Region durch Mittelwertbildung, insbesondere durch Bildung des Medians, aus den Gutflussgeschwindigkeiten der jeweiligen Region ermittelt, und diskrete Gutflussgeschwindigkeitsverläufe aus den gemittelten Gutflussgeschwindigkeiten jeder Region abgeleitet und bewertet.

Dadurch werden die Informationen übersichtlich zusammengefasst und die Informationsmenge reduziert. Zudem kann Bildverarbeitungssystem die Bilddaten schneller verarbeiten. Durch einen diskreten Gutflussgeschwindigkeitsverlauf ist zudem das Lokalisieren der Problemstellen und das Einleiten von positionsspezifischen Gegenmaßnahmen vereinfacht.

Eine bereichsweise Abnahme der Gutflussgeschwindigkeiten und/oder der gemittelten Gutflussgeschwindigkeiten wird identifiziert und als Gutstauentstehung interpretiert, und der entstehende Gutstau durch Regelungsmaßnahmen aufgelöst. Dadurch wird der Fahrzeugführer entlastet, da er den Erntegutfluss nicht mehr visuell in der Erntegutbergungsvorrichtung überwachen muss.

Um den Fahrzeugführer weiter zu entlasten und Erntegutstaus rechtzeitig und wirkungsvoll zu verhindern, umfasst in einer vorteilhaften Ausgestaltung der Erfindung die Erntegutaufnahmevorrichtung eine Haspel und die Regelmaßnahmen bei Gutstauentstehung umfassen eine Reduktion einer Fahrzeuggeschwindigkeit, und/oder eine Reduktion einer Erntegutfördergeschwindigkeit der Erntegutfördervorrichtung, und/oder eine Verschiebung der Haspel, sodass Teile von ihr, insbesondere Haspelzinken, in Bereiche des Erntegutflusses mit identifizierter Gutstauentstehung eingreifen.

Gemäß einer weiteren vorteilhaften Ausgestaltung der Erfindung ist vorgesehen, dass ein bereichsweiser Stillstand des Erntegutflusses identifiziert und als Gutstau interpretiert wird, und der Gutstau durch weitere Regelmaßnahmen aufgelöst wird, wobei die weiteren Regelmaßnahmen ein Stoppen oder ein Zurücksetzen der landwirtschaftlichen Arbeitsmaschine, und/oder ein Heben der Erntegutbergungsvorrichtung umfassen. Dies hat unter anderem den Effekt, dass kein weiteres Erntegut in die Erntegutbergungsvorrichtung eintritt und angestautes Erntegut durch Hebung der Erntegutbergungsvorrichtung und der daraus resultierenden Neigung der Erntegutbergungsvorrichtung leichter zum Schrägförderer befördert werden kann. Ein manuelles Entfernen des Gutstaus durch den Fahrzeugführer ist dann nicht erforderlich.
- Fig. 1: eine schematische perspektivische Ansicht einer landwirtschaftlichen Arbeitsmaschine mit einem Bildverarbeitungssystem;
- Fig. 2: ein schematische Darstellungen eines Bildpaares und von Intensitätsmustern;
- Fig. 3: eine schematische Darstellung der Vorverarbeitung als ersten Schritt des Bildverarbeitungssystems;
- Fig. 4: eine schematische Darstellung von einer Ermittlung eines optischen Flusses und von korrespondierenden Vektorfeldern mittels der pyramidalen Lukas-Kanade-Methode als einen weiteren Schritt des Bildverarbeitungssystems;
- Fig. 5: eine schematische Darstellung von: - ermittelten Geschwindigkeiten eines Geschwindigkeitsverlaufs - eine Einteilung des Erntegutflusses in Regionen - einen diskreten Gutflussgeschwindigkeitsverlauf als Teil eines folgenden Schrittes des Bildverarbeitungssystems;

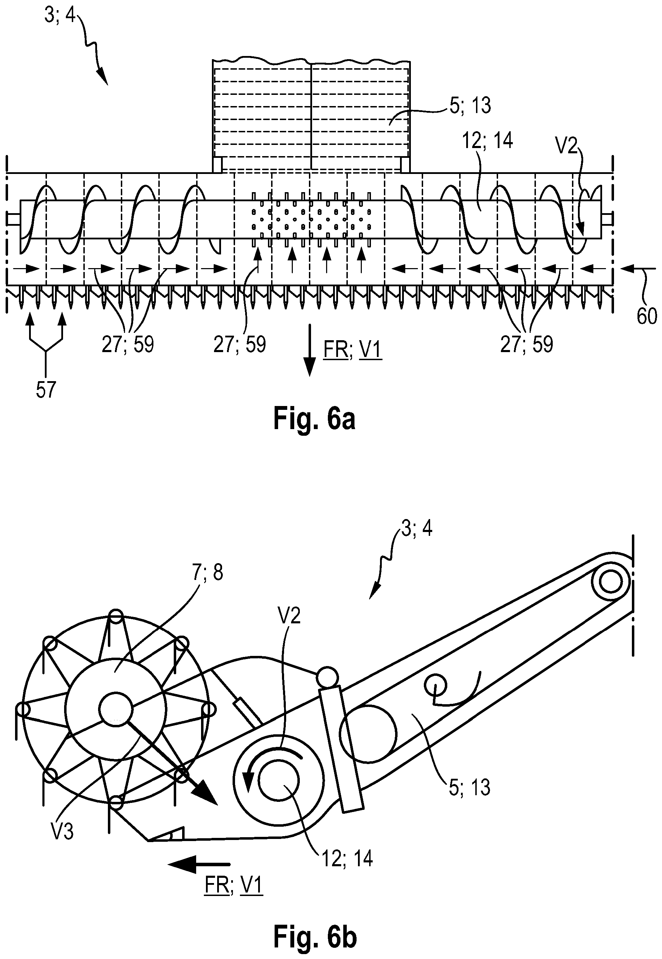

- Fig. 6: eine schematische Darstellung der Erntegutbergungsvorrichtung; und zwar in a) eine Ansicht von oben mit ermittelten gemittelten Gutflussgeschwindigkeiten; und in b) eine Seitenansicht mit der Steuerung der Erntegutbergungsvorrichtung.

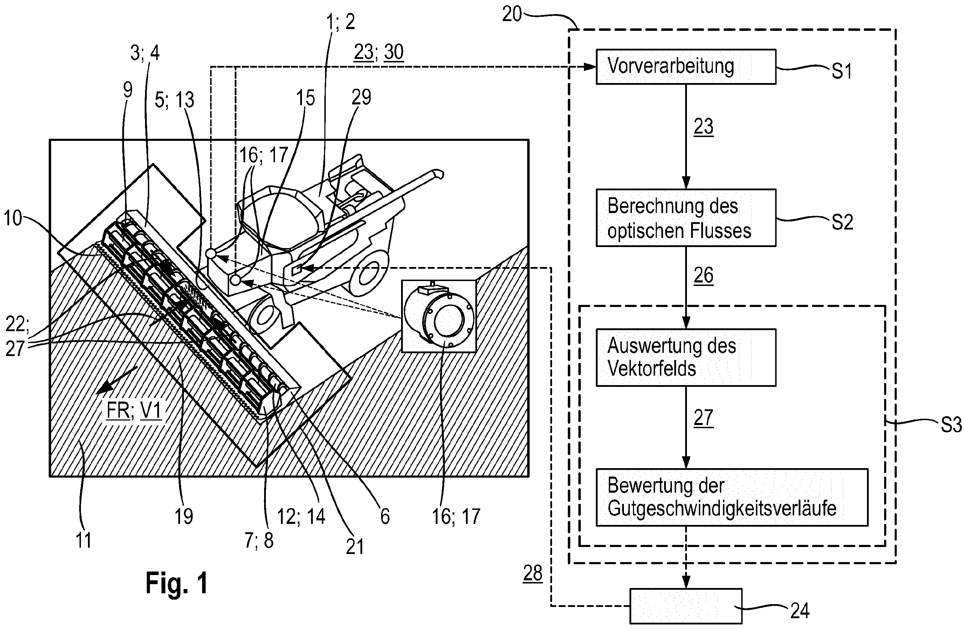

Fig. 1 zeigt in einer schematischen perspektivischen Ansicht einer an sich bekannten und als Mähdrescher 2 ausgebildeten landwirtschaftliche Arbeitsmaschine 1 mit einem als Schneidwerksvorsatz 4 für Getreide ausgebildeten Erntegutbergungsvorrichtung 3. Alternativ kann die Erntegutbergungsvorrichtung 3 zum Beispiel als Bandschneidwerk, Mähwerk, oder als Pflückvorsatz ausgebildet sein. Die landwirtschaftliche Arbeitsmaschine 1 bewegt sich in Fahrtrichtung FR mit einer Fahrzeuggeschwindigkeit V1. Die Erntegutbergungsvorrichtung 3 ist in einem vorderen Bereich des Mähdreschers 2 angeordnet und über eine als Schrägförderer 5 ausgebildete Ernteguteinzugsvorrichtung 13 mit dem Mähdrescher 2 verbunden. Die Erntegutbergungsvorrichtung 3 weist ein Schneidwerksgehäuse 6 und eine als Messerbalken mit oszillierenden Messerklingen ausgebildete Erntegutschneidvorrichtung 10 auf. Zudem umfasst die Erntegutbergungsvorrichtung 3 eine Erntegutaufnahmevorrichtung 8. Die Erntegutaufnahmevorrichtung 8 umfasst im aufgeführten Beispiel eine verstellbar gelagerte, drehbare Haspel 7. Die Haspel weist Haspelzinken zur Erfassung des Erntegutes auf. Die Haspel 7 unterstützt die Aufnahme des Erntegutes 9 in den Erntegutbergungsvorrichtung 3. Zudem umfasst die Erntegutaufnahmevorrichtung 8 vorzugsweise einen Schneidtisch. Des Weiteren umfasst die Erntegutbergungsvorrichtung 3 eine, innerhalb des Schneidwerksgehäuses 6 und im Wesentlichen quer zu einer Fahrtrichtung FR angeordnetem, und der Erntegutschneidvorrichtung 10 nachgeordneten, als Querförderschnecke 12 ausgebildete, Erntegutfördervorrichtungen 14. Die Querförderschnecke 12 fördert das geerntete Erntegut 9 zur Mitte der Erntegutbergungsvorrichtung 3, wo es dann das Erntegut 9 an die, als Schrägförderer 5 ausgebildete, Ernteguteinzugsvorrichtung 13 übergibt. Der Schrägförderer 5 fördert dann das Erntegut 9 zu einem Dreschwerk (nicht dargestellt) des Mähdreschers 2.

Es ist im Rahmen der Erfindung, dass die Erntegutfördervorrichtung 14, die Erntegutaufnahmevorrichtung 8, die Erntegutschneidvorrichtung 10 und/oder die Ernteguteinzugsvorrichtung 13 in Abhängigkeit des Typs der Erntegutbergungsvorrichtung 3 anderweitig ausgestaltet sind. Zum Beispiel ist im Falle eines Bandschneidwerkes/Draperschneidwerkes die Erntegutfördervorrichtung 14 als Förderbänder mit optionalen Leitschnecken ausgestaltet und die Ernteguteinzugsvorrichtung 13 kann zusätzlich eine Einzugswalze am Eingang des Schrägförderers 5 aufweisen.

Vorzugsweise ist an einer vorderen Kante oberhalb einer Fahrzeugkabine 15 des Mähdreschers 2 ein Sensorsystem 17 angeordnet. Das Sensorsystem 17 umfasst mindestens einen optischen Sensor, vorzugsweise ausgebildet als eine Kamera 16. Das Sensorsystem 17 ist derart ausgebildet und angeordnet, dass dessen Erfassungsbereich 21 zumindest einen Erntegutfluss 22 in der Erntegutbergungsvorrichtung 3 abdeckt. Das Sensorsystem 17 generiert Bilder 23 zumindest vom Erntegutfluss 22 in der Erntegutbergungsvorrichtung 3. Dabei können entweder ein oder mehrere Teile des Erntegutflusses 22 oder der gesamte Erntegutfluss 22 erfasst werden. Das Sensorsystem 17 ist weiterhin an ein Bildverarbeitungssystem 20 gekoppelt. Das Sensorsystem 17 überträgt die generierten Bilder 23 an das Bildverarbeitungssystem 20.

Das Bildverarbeitungssystem 20 dient zur erfindungsgemäßen Verarbeitung der generierten Bilder 23. Es ist dazu eingerichtet, die übertragenden Bilder 23 in einem ersten Schritt S1 vorzuverarbeiten, in einem weiteren Schritt S2 aus den vorverarbeiteten Bildern 23 erfindungsgemäß einen optischen Fluss 25 und korrespondierende Vektorfelder 26 zu ermitteln, und in einem folgenden Schritt S3 aus den korrespondierenden Vektorfeldern 26 Gutflussgeschwindigkeitsverläufe 28 des Erntegutflusses 22 abzuleiten und zu bewerten.

Das Bildverarbeitungssystem 20 ist weiterhin dazu eingerichtet, Gutflussgeschwindigkeiten 27 aus dem korrespondierenden Vektorfeld 26 abzuleiten. Durch Vergleich von mindestens zweier, vorzugsweise aufeinanderfolgender, Bilder 23 einer Bildsequenz 30 des Sensorsystems 17, sind die Gutflussgeschwindigkeiten 27 mittels Berechnung des optischen Flusses 25 und der korrespondierenden Vektorfelder 26 berechenbar. Vorzugsweise sind die Bilder 23 frames eines Videos einer Kamera 16. Der optische Fluss 25 einer Bildsequenz 30 ist das Vektorfeld 26 der in eine Bildebene projizierten Geschwindigkeit 56 von sichtbaren Punkten. Bevorzugt sind die Gutflussgeschwindigkeiten 27 lokal aufgelöste und damit Teil einer Vielzahl von Gutflussgeschwindigkeiten 27 in einem Erntegutfluss 22. Bevorzugt ist das Bildverarbeitungssystem 20 dazu eingerichtet, die Gutflussgeschwindigkeiten 27 zu bewerten. Die Bewertung der Gutflussgeschwindigkeiten 27 kann alternativ oder zusätzlich zur Bewertung der Gutflussgeschwindigkeitsverläufe 28 erfolgen. Bevorzugt sind die Gutflussgeschwindigkeitsverläufe 28 aus den Gutflussgeschwindigkeiten 27 abgeleitet. In einem Gutflussgeschwindigkeitsverlauf 28 werden mindestens zwei Gutflussgeschwindigkeiten 27 zeitlich und/oder örtlich zueinander in Bezug gesetzt. Dabei können die Gutflussgeschwindigkeitsverläufe 28 örtliche Gutflussgeschwindigkeitsverläufe 28 und/oder zeitliche Gutflussgeschwindigkeitsverläufe 28 sein. Bevorzugt werden ständig aktualisierte örtliche Gutflussgeschwindigkeitsverläufe 28 bewertet.

Die abgeleiteten und bewerteten Gutflussgeschwindigkeitsverläufe 28 werden anschließend an eine an das Bildverarbeitungssystem 20 gekoppelte Datenausgabeeinheit 24 übergeben. Vorzugsweise ist die Datenausgabeeinheit 24 als eine Schnittstelle ausgebildet. Weiterhin bevorzugt ist die Datenausgabeeinheit 24 über einen CAN-Bus, ISO-Bus, oder ein anderes Datenübertragungssystem, wie zum Beispiel Bluetooth oder WLAN, mit einem oder mehreren Systemen der landwirtschaftlichen Arbeitsmaschine 1 verbunden. Vorzugsweise ist die Datenausgabeeinheit 24 mit einer Steuer- und Regeleinheit 29 und/oder mit der Anzeigeeinheit verbunden. Vorzugsweise ist die Datenausgabeeinheit 24 dazu eingerichtet, die Gutflussgeschwindigkeiten 27 und/oder die abgeleiteten und bewerteten Gutgeschwindigkeitsverläufe 28 einer Steuer- und Regeleinheit 29 der landwirtschaftlichen Arbeitsmaschine 1 zur Verfügung zu stellen.

Das Sensorsystem 17 umfasst vorzugsweise zumindest eine Kamera 16. Die Bildsequenz 30 ist dann ein Video. Im vorliegenden Beispiel sind zwei Kameras 16 als Sensorsysteme 17 an der landwirtschaftlichen Arbeitsmaschine 1 angeordnet. Vorzugsweise sind ausreichend Kameras 16 an der landwirtschaftlichen Arbeitsmaschine 1 angeordnet, um zumindest den Erntegutfluss 22 der Erntegutbergungsvorrichtung 3 bevorzugt vollständig zu erfassen. Somit hängt die Zahl der Kameras 16 im Wesentlichen von den verwendeten Objektiven und einer Breite der Erntegutbergungsvorrichtung 3 ab. Alternativ ist es denkbar, lediglich einen Bereich des Erntegutflusses 22 zu erfassen, wo ein Gutstau am wahrscheinlichsten ist, zum Beispiel ein Bereich des Erntegutflusses 22 zwischen der Erntegutfördervorrichtung 14 und der Ernteguteinzugsvorrichtung 13.

Bevorzugt sind die Kameras 16 als Monochromkameras 16 und/oder Farbkameras 16 ausgebildet. Alternativ oder zusätzlich ist auch der Einsatz von Infrarotkameras 16 denkbar. Die Kameras 16 haben bevorzugt eine hohe Bildwiederholungsfrequenz/ Frame-Rate. Besonders bevorzugt ist die Frame-Rate höher als 20 frames pro Sekunde. Ebenso ist es bevorzugt, dass eine Beleuchtung der Erntegutbergungsvorrichtung 3 durch eine Leuchtquelle stattfindet. Im Falle der Nutzung einer Infrarotkamera 16 findet die Beleuchtung im Infrarotbereich bzw. in einem zur Erfassung vorgesehenen Wellenlängenbereich statt. Die Beleuchtung kann bevorzugt automatisch an eine Umgebungslichtintensität angepasst werden.

Vorzugsweise erfassen die Bilder 23 auch das angrenzende Umfeld 19 der Erntegutbergungsvorrichtung 3. Dabei umfasst das angrenzende Umfeld 19 bevorzugt einen Feldbereich in Fahrtrichtung FR vor der Erntegutbergungsvorrichtung 3 und/oder einen Feldbereich in Fahrtrichtung FR hinter der Erntegutbergungsvorrichtung 3. Durch Erfassung des Umfeldes 19 kann eine Fahrzeuggeschwindigkeit V1 optisch mit dem erfindungsgemäßen Bildverarbeitungsverfahren ermittelt werden. Die optisch ermittelte Fahrzeuggeschwindigkeit V1 kann dann mit Werten eines an sich bekannten und hier nicht näher beschriebenen Fahrzeuggeschwindigkeits-Messsystems der landwirtschaftlichen Arbeitsmaschine 1 abgeglichen werden und als Referenzwert für das Bildverarbeitungssystem 20 dienen. Vorzugsweise erstreckt sich das erfasste Umfeld 19 bis zu drei Meter vor und bis zu zwei Meter hinter der Erntegutbergungsvorrichtung 3.

Bevorzugt ist das Bildverarbeitungssystem 20 eine elektronische Recheneinheit, die Bilder 23 und/oder Bilddaten, die aus den Bildern 23 abgeleitet sind, elektronische verarbeitet und auswertet. Dazu weist die Recheneinheit bevorzugt einen Speicher mit abgespeicherten Algorithmen zur Bildverarbeitung auf. Die Bilddaten umfassen zum Beispiel die korrespondierenden Vektorfelder 26, die Gutflussgeschwindigkeiten 27, und/oder aus diesen Bilddaten berechnete Bilddaten. Vorzugsweise ist die Recheneinheit der landwirtschaftlichen Arbeitsmaschine 1 zugeordnet.

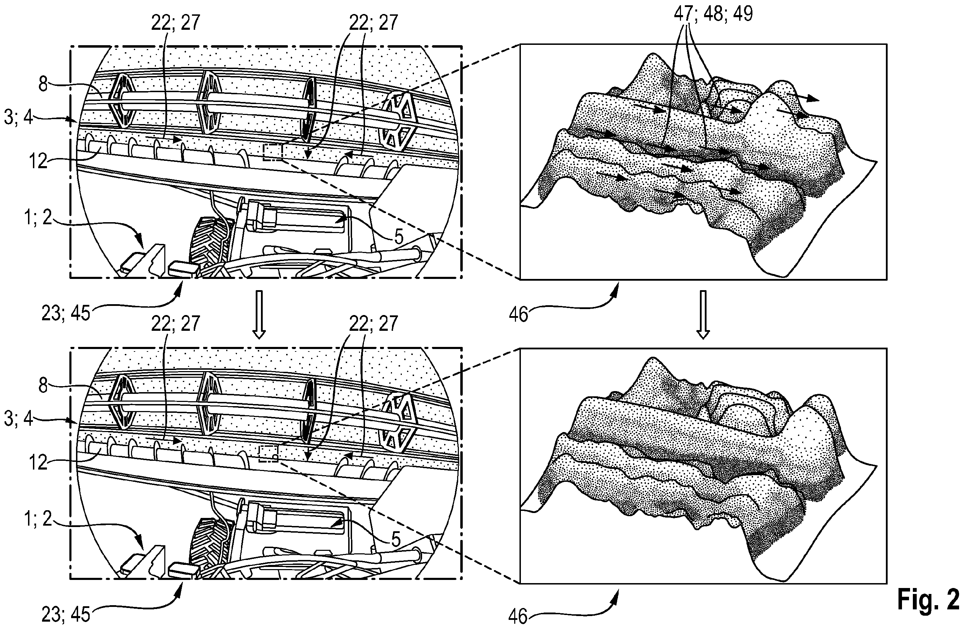

Fig. 2 zeigt eine schematische Darstellung zweier aufeinanderfolgender Bilder 43,44 einer Bildsequenz 30, die zur Berechnung des optischen Flusses 25 verwendbar sind. Jeweils zwei Bilder 43,44 der Bildsequenz 30 werden vom Bildverarbeitungssystem 20 bevorzugt zu einem Bildpaar 45 gruppiert. Im Folgenden werden die Bilder 43,44 eines Bildpaares auch als ein erstes und ein zweites Bild 43,44 bezeichnet. Vorzugsweise folgen die Bilder 43,44 eines Bildpaares 45 zeitlich direkt aufeinander, um einen möglichst geringen Zeitabstand zueinander aufzuweisen. Des Weiteren wird eine Zeit zwischen den Bildern 23 erfasst und/oder ist vorgegeben. Insbesondere weist jedes Bild 23 mindestens ein Intensitätsmuster 46 auf. Das Intensitätsmuster 46 ist bevorzugt ein Intensitätshöhen-Profil eines Bildteils und/oder des gesamten Bildes 23. Es bildet bevorzugt für jedes Pixel, und vorzugsweise ihn umgebene Pixel, des Bildes 23 eine Intensitätshöhe mit zugehöriger Ortskoordinate im Bild 23 ab. Es weist vorzugsweise mindestens die Ausmaße eines Pixels mit mindestens einem ihn umgebenden Pixel auf. In Abhängigkeit der Ausmaße des Intensitätsmusters 46 weist jedes Bild 23 bevorzugt ein oder mehrere Intensitätsmuster 46 auf. Der optische Fluss 25 wird vorzugsweise für die Intensitätsmuster 46 jedes Bildpaares 45 berechnet.

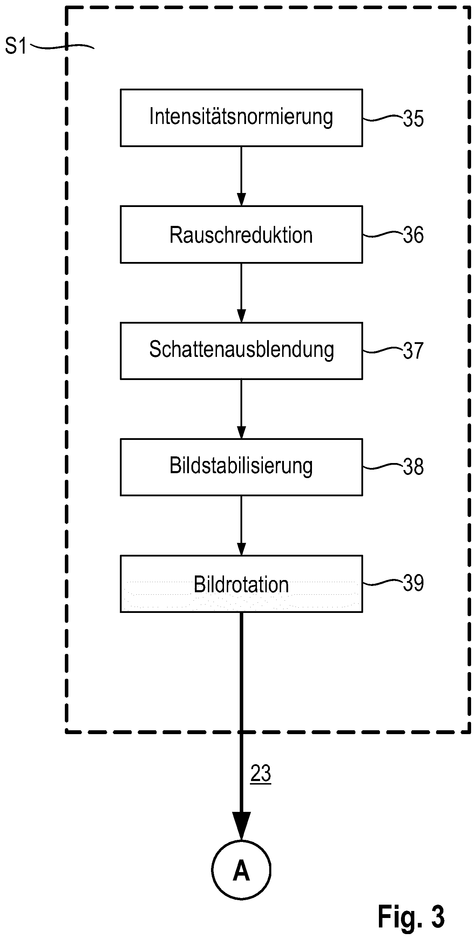

Fig. 3 zeigt eine schematische Darstellung der Vorverarbeitung als ersten Schritt S1 des Bildverarbeitungssystems 20. Bevorzugt umfasst das Vorverarbeiten der Bilder 23 in dem ersten Schritt S1 eine Intensitätsnormierung 35. Weiterhin bevorzugt umfasst das Vorverarbeiten der Bilder 23 in dem ersten Schritt S1 eine Rauschreduktion 36. Des Weiteren umfasst das Vorverarbeiten der Bilder 23 in dem ersten Schritt S1 vorzugsweise eine Schattenausblendung 37. Weiterhin ist es bevorzugt, dass das Vorverarbeiten der Bilder 23 in dem ersten Schritt S1 eine Bildstabilisierung 38 umfasst. Zudem umfasst das Vorverarbeiten der Bilder 23 in dem ersten Schritt S1 vorzugsweise eine Bildrotation 39. Es liegt im Rahmen der Erfindung, dass eine oder mehrere der aufgeführten Vorverarbeitungen zur Vorverarbeitung der Bilder 23 durchgeführt werden. Vorzugsweise wird die Vorverarbeitung in der in Fig. 3 dargestellten Reihenfolge durchgeführt. Eine andere Reihenfolge ist jedoch denkbar und liegt im Rahmen der Erfindung.

Die Intensitätsnormierung 35 wird bevorzugt mittels einer Histogrammequalisierung durchgeführt. Vorzugsweise wird dabei aus einer Intensitätsverteilung in einem Histogramm im Wesentlichen eine Gleichverteilung berechnet, damit weitestgehend ein gesamter zur Verfügung stehende Intensitätsbereich ausgenutzt wird. Bereiche des Histogramms mit häufigen Intensitäten werden dabei verbreitert, während Bereiche des Histogramms mit weniger häufigen Intensitäten komprimiert werden. Alternativ ist es denkbar, andere Methoden der Intensitätsnormierung 35 zu verwenden, insbesondere andere homogene Standardtransformationen, insbesondere andere Histogramm-basierte Methoden.

Bevorzugt wird die Rauschreduktion 36 mittels eines Medianfilter durchgeführt. Vorzugsweise werden dabei die Intensitäten der Pixel in einer definierten Umgebung eines Pixels erfasst, nach der Größe sortiert und in eine Rangordnung gebracht. Anschließend wird der Intensitätswert gewählt, der sich in der Mitte der Rangordnung befindet und den Intensitätswert des aktuellen Pixels ersetzt. Dadurch werden insbesondere kleine helle Punkte aus den Bildern 23 entfernt. Alternativ ist es denkbar, andere nicht-lineare Filter, insbesondere andere Rangordnungsfilter, zur Rauschreduktion 36 zu verwenden.

Weiterhin bevorzugt wird die Schattenausblendung 37 mittels eines Differenzfilters durchgeführt. Vorzugsweise wird dabei ein Hilfsbild aus dem jeweiligen Bild 23 berechnet, wobei die Intensitäten der Pixel des Hilfsbildes jeweils ein Mittelwert der Intensitäten der das jeweilige Pixel umgebenen Pixel des jeweiligen Bildes 23 ist. Vorzugsweise werden die Intensitäten des Hilfsbildes anschließend jeweils vom Bild 23 subtrahiert, sodass im resultierenden Bild 23 die Intensität jedes Pixels die Abweichung vom Mittelwert aus den umgebenen Pixeln des ursprünglichen Bildes 23 ist. Dabei werden negative Intensitätswerte auf 0 gesetzt und die die gesamten Intensitätswerte optional mit einem Korrekturfaktor multipliziert. Weiterhin bevorzugt wird die Bildstabilisierung 38 derart durchgeführt, dass ein Referenzbereich im Bild 23 ausgewählt wird, der in allen Bildern 23 vorhanden ist, zum Beispiel der Schrägförderer 5, die Haspel 7 oder andere Bauteile der landwirtschaftlichen Arbeitsmaschine 1. Anschließend wird bevorzugt eine vertikale und horizontale Position des Referenzbereichs im Bild 23 fixiert und das Bild 23 daran ausgerichtet, indem der optische Fluss 25 und korrespondierende Vektorfelder 26 für den Referenzbereich jedes Bildes 23 berechnet werden, und jedes Bild 23 mit Hilfe des jeweiligen korrespondierenden Vektorfeldes 26 des Referenzbereichs derart positionskorrigiert wird, sodass Erschütterungen und Schwingungen der Fahrzeugkabine 15 und damit auch des Sensorsystems 17 im Bild 23 ausgeglichen werden und der Erfassungsbereich 21 im Wesentlichen konstant gehalten wird. Bevorzugt wird hier zur Bestimmung des optischen Flusses 25 das gleiche Verfahren wie im weiteren Schritt S2 verwendet.

Bevorzugt wird bei der Bildrotation 39 jedes Bild 23 anhand von Kanten der Erntegutbergungsvorrichtung 3 und/oder der landwirtschaftlichen Arbeitsmaschine 1 ausgerichtet. Vorzugsweise werden die Kanten derart ausgerichtet, dass sie parallel oder orthogonal zur Fahrtrichtung FR und/oder zum Erntegutfluss 22 verlaufen. Bevorzugt erfolgt dazu eine Kantendetektion, insbesondere mittels einer Hough-Transformation.

Die vorverarbeiteten Bilder 23 werden dann zur Berechnung des optischen Flusses 25 und der korrespondierenden Vektorfelder 26 im weiteren Schritt S2 verwendet.

In dem weiteren Schritt S2 werden zur Ermittlung des optischen Flusses 25 vorzugsweise Positionsverschiebungen von den Intensitätsmustern 46 zwischen den Bildern 43,44 mindestens eines Bildpaares 45 ermittelt. Somit wird vorzugsweise einzelnen Pixeln der Intensitätsmuster 46 jeweils eine spezifische Positionsverschiebung zugeordnet. Bevorzugt umfassen die Positionsverschiebungen Verschiebungsbeträge und Verschiebungsrichtungen. Jede Verschiebung kann als ein Vektor 47 dargestellt werden.

Die Verschiebungsbeträge geben die Weite einer Verschiebung wieder. Die Verschiebungsrichtungen geben eine Richtung der Verschiebung wieder. Die Verschiebungsbeträge 48 und Verschiebungsrichtungen 49 der Intensitätsmuster 46 für jedes Bildpaar 45 werden vorzugsweise jeweils als Vektoren 47 in dem korrespondierendem Vektorfeld 25, insbesondere einer Matrix, des jeweiligen Bildpaares 45 zusammengefasst. Für jedes Bildpaar 45 wird somit vorzugsweise jeweils ein korrespondierendes Vektorfeld 26 berechnet. Das Vektorfeld ist somit eine Bündelung der Vektoren 47 eines Bildpaares 45 zu einem mathematischen Term. Bevorzugt werden die Vektoren 47 flächendeckend für die Intensitätsmuster 46 eines Bildpaares 45 berechnet.

Unter der Annahme, dass der Zeitabstand zwischen den Bildern 43,44 eines Bildpaares 45 klein genug ist, kann näherungsweise davon ausgegangen werden, dass sich das Intensitätsmuster 46 vom ersten zum zweiten Bild 43,44 eines Bildpaares 45 zwar verschieben kann, jedoch die Intensitätshöhen konstant bleiben. Dadurch können durch Zuordnung der Intensitätsmuster 46 eines Bildpaares 31 zueinander Verschiebungen im Bild 23 ermittelt werden.

Jede Verschiebung kann in Abhängigkeit des generierten Bildes 23 zweidimensional oder dreidimensional sein. Bevorzugt ist die Verschiebung jedoch zweidimensional. Alternativ lässt sich der optische Fluss 25 auch von erfassten Bildmerkmalen und Objekten berechnen. Dies erfordert jedoch in der Regel eine vorherige Bildsegmentierung zur Kantenerkennung.

In dem weiteren Schritt S2 werden der optische Fluss 25 und die korrespondierenden Vektorfelder 26 bevorzugt mittels einer differenziellen Methode berechnet. Dabei wird bei der differenziellen Methode insbesondere durch Ableitung der Intensitätsmuster 46 jedes Bildes 23 jeweils eine Gradientenfunktion erzeugt. Vorzugsweise werden die Intensitäten dazu zeitlich oder räumlich partiell abgeleitet. Des Weiteren werden vorzugsweise die Gradientenfunktionen beider Bilder 23 des jeweiligen Bildpaares 45 subtrahiert. Bevorzugt gibt dann die resultierende Funktion die Verschiebung der Intensitätsmuster 46 für das korrespondierende Vektorfeld 26 des Bildpaares 45 wieder. Alternativ ist es denkbar, den optischen Fluss 25 mittels Phasenkorrelation, blockbasierten oder diskreten Optimierungsmethoden zu ermitteln.

Bevorzugt ist in dem weiteren Schritt S2 die differentielle Methode eine Lukas-Kanade-Methode. Vorzugsweise wird bei dieser Methode die zusätzliche Annahme getroffen, dass eine Gleichheit des optischen Flusses 25 in einer lokalen Umgebung eines Pixels eines Bildes 23, für den der optische Fluss 25 bestimmt wird, vorliegt. Des Weiteren sind die Verschiebungen vorzugsweise klein. Dazu sind die Frame-Raten vorzugsweise hoch, um geringe Zeitabstände zwischen den Bildern 43,44 eines Bildpaares 45 zu ermöglichen. Die lokale Umgebung eines Pixels kann an das Pixel angrenzende Pixel und/oder den Pixel beabstandet umgebende Pixel umfassen. Neben dem Vektorfeld 26 wird mittels der Lukas-Kanade-Methode vorzugsweise zusätzlich eine Transformationsmatrix berechnet, welche Rotationsbewegungen der Intensitätsmuster 46, vorzugsweise von Teilen der Intensitätsmuster 46, erfasst. Alternativ ist es denkbar, den optischen Fluss 25 zum Beispiel mit einer Horn-Schunck-Methode zu berechnen. Zudem ist es denkbar, den optischen Fluss 25 mit von der Lukas-Kanade-Methode und/oder der Horn-Schunk-Methode abgeleiteten Methoden zu berechnen.

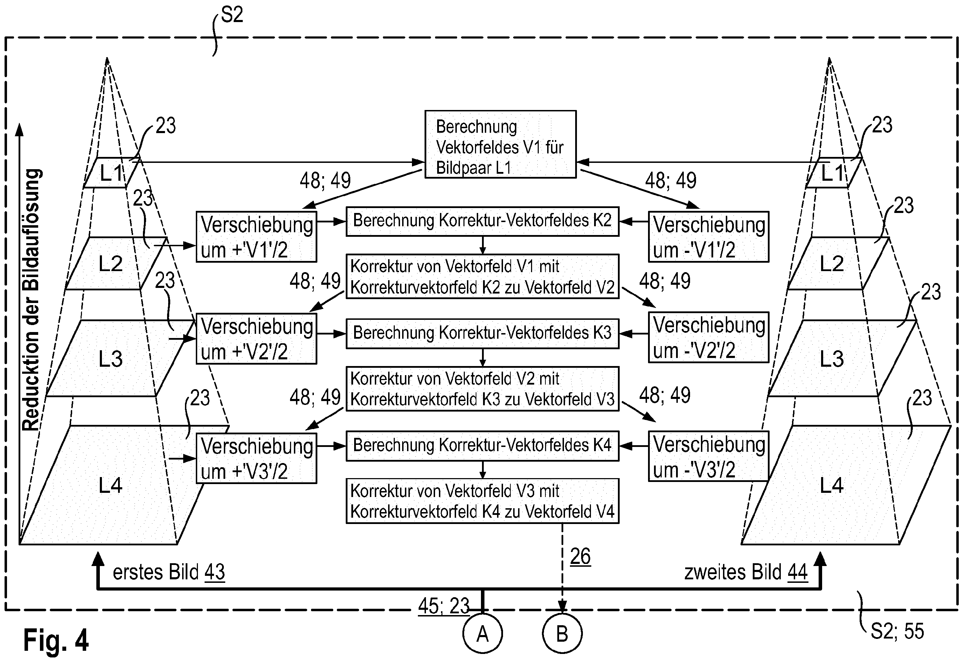

Figur 4 zeigt eine schematische Darstellung der Ermittlung des optischen Flusses 25 und von korrespondierenden Vektorfeldern 26 als einen weiteren Schritt S2 des Bildverarbeitungssystems 20. Die Berechnung erfolgt vorzugsweise mittels einer pyramidalen Lucas-Kanade-Methode 55, welche von der Lucas-Kanade-Methode abgeleitet ist. Zur Berechnung des optischen Flusses 25 und von korrespondierenden Vektorfeldern 26 wird bevorzugt eine erste, vorzugsweise ursprüngliche, Bildauflösung der Bilder 43,44 jedes Bildpaares 45 zu zumindest einer weiteren Bildauflösung reduziert, bevorzugt zu mehreren Bildauflösungen. Im vorliegenden Beispiel liegen beide Bilder 43,44 des jeweiligen Bildpaares 45 in vier Bildauflösungen vor und sind insbesondere in Abhängigkeit dieser Bildauflösung einer gleichen Anzahl an Auflösungsebenen L1-L4 zugeteilt. Die Bildauflösungen steigen mit jeder Auflösungsebene L1-L4 an. Die erste Auflösungsebene L1 umfasst die Bilder 23 mit einer der weiteren Bildauflösungen, insbesondere mit der niedrigsten Bildauflösung. Die zweite Auflösungsebene L2 umfasst die Bilder 23 mit einer anderen der weiteren Bildauflösungen, insbesondere mit der zweit-niedrigsten Bildauflösung. Die dritte Auflösungsebene L3 umfasst die Bilder 23 mit wieder einer anderen der weiteren Bildauflösungen, insbesondere mit der drittniedrigsten-niedrigsten Bildauflösung. Die vierte Auflösungsebene L4 umfasst die Bilder 23 mit der ersten Bildauflösung, das heißt ihrer höchsten, ursprünglichen Bildauflösung.

Anschließend werden der optische Fluss 25 und die korrespondierenden Vektorfelder 26 berechnet und bei einer schrittweisen Wiederherstellung der ersten Bildauflösung iterativ korrigiert. Dabei wird bevorzugt zuerst der optische Fluss 25 und ein erstes Vektorfeld V1 für das Bildpaar 45 mit der niedrigsten Bildauflösung aus der Auflösungsebene L1 berechnet. Vorzugsweise wird dazu die Lukas-Kanade-Methode verwendet. Anschließend werden die Verschiebungsbeträge 48 und Verschiebungsrichtungen 49 des ersten Vektorfeldes V1 verwendet, um die Intensitätsmuster 46 des ersten Bildes 43 des Bildpaares 45 der zweiten Auflösungsebene L2 um halbe Verschiebungsbeträge 48 des ersten Vektorfeldes V1 in die Verschiebungsrichtungen 49 des Vektorfeldes V1 zu verschieben, und die Intensitätsmuster 46 des zweiten Bildes 44 des jeweiligen Bildpaares 45 der zweiten Auflösungsebene L2 um die halben Verschiebungsbeträge 48 des ersten Vektorfeldes V1 entgegen den Verschiebungsrichtungen 49 des Vektorfeldes V1 zu verschieben. Anschließend wird aus beiden verschobenen Intensitätsmustern 46 ein Korrektur-Vektorfeld K2 der zweiten Auflösungsebene L2 berechnet. Jedes Korrekturvektorfeld K2-K4 gibt somit einen auflösungsbedingten Fehler im Vektorfeld der vorherigen Auflösungsebene L1-L3 wieder. Als nächstes wird das erste Vektorfeld V1 mit dem Korrekturvektorfeld K2 der zweiten Auflösungsebene L2 korrigiert und es ergibt sich aus dem ersten Vektorfeld V1 das zweite Vektorfeld V2. Das zweite Vektorfeld V2 weist nun eine genauer berechnete Verschiebungsbeträge 48 und Verschiebungsrichtungen 49 auf. Diese werden nun verwendet, um die Intensitätsmuster 46 der Bilder 43,44 des jeweiligen Bildpaares 45 der dritten Auflösungsebene L3, analog wie zuvor, zu verschieben. Anschließend wird aus beiden verschobenen Intensitätsmustern 46 ein Korrektur-Vektorfeld K3 der dritten Auflösungsebene L3 berechnet. Daraufhin wird das zweite Vektorfeld V2 mit dem Korrekturvektorfeld K3 der dritten Auflösungsebene L3 korrigiert und es ergibt sich aus dem zweiten Vektorfeld V2 das dritte Vektorfeld V3. Das dritte Vektorfeld V2 weist nun abermals genauere Verschiebungsbeträge 48 und Verschiebungsrichtungen 49 auf. Diese werden analog wie zuvor verwendet, um Intensitätsmuster 46 der Bilder 43,44 der vierten Auflösungsebene L4 zu verschieben und ein Korrekturvektorfeld K4 der vierten Auflösungsebene L4 aus den Intensitätsmustern 46 der Bilder 23 der vierten Auflösungsebene L4 zu berechnen. Daraufhin wird das dritte Vektorfeld V3 mit dem Korrekturvektorfeld K4 der vierten Auflösungsebene L4 korrigiert und es ergibt sich aus dem dritten Vektorfeld V3 das vierte Vektorfeld V4. Das vierte Vektorfeld V4 weist vorzugsweise die genauesten Verschiebungsbeträge 48 und Verschiebungsrichtungen 49 auf. Es wird als korrespondierendes Vektorfeld 26 im folgenden Schritt S3 weiterverwendet.

Die einzelnen Vektorfelder V1-V4 und Korrektur-Vektorfelder K1-K4 der zugehörigen Auslösungsebenen L1-L4 der pyramidalen Lukas-Kanade-Methode 55 werden bevorzugt jeweils mit der Lukas-Kanade-Methode berechnet, welche auf der differentiellen Methode basiert.

Eine Anzahl an Auflösungsebenen L1-L4 hängt bevorzugt von der ersten, das heißt ursprünglichen, Bildauflösung der Bilder 23 und/oder einer geforderten Genauigkeit der ermittelten Werte ab. Mit einer hohen Bildauflösung der Bilder 23 kann die Bildauflösung stärker reduziert und die Zahl an Auflösungsebenen L1-L4 erhöht werden.

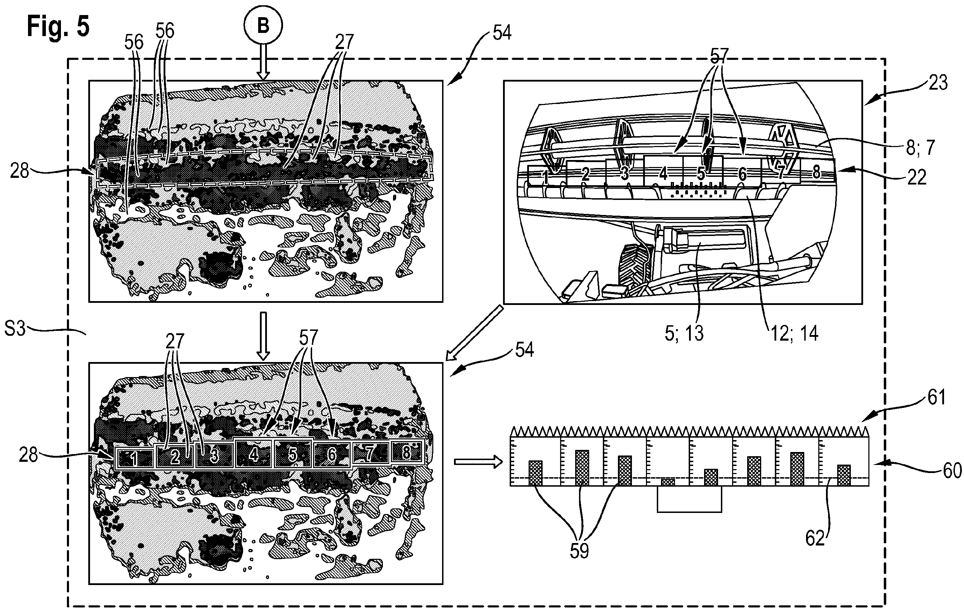

Fig. 5 zeigt eine schematische Darstellung von ermittelten Geschwindigkeiten 56 aus einem Bildpaar 45 als einen Geschwindigkeitsverlauf 54 und eine Einteilung des Erntegutflusses 22 in Regionen 57 als Teil eines folgenden Schrittes S3 des Bildverarbeitungssystems 20. Bevorzugt werden in dem folgenden Schritt S3 Geschwindigkeiten 56 in den Bildern 23, insbesondere die Gutflussgeschwindigkeiten 27 des Erntegutflusses 22 in der Erntegutbergungsvorrichtung 3, aus den Verschiebungsbeträgen 48 des korrespondierenden Vektorfeldes 26 des jeweiligen Bildpaares 45 und der Zeit zwischen den Bildern 43,44 der jeweiligen Bildpaare 45 berechnet. Vorzugsweise werden die Geschwindigkeiten 56, als Geschwindigkeitsverläufe 54 dargestellt. Weiterhin bevorzugt werden die Gutflussgeschwindigkeiten 27 als Gutflussgeschwindigkeitsverläufe 28 dargestellt. Vorzugsweise findet die Darstellung der Gutflussgeschwindigkeitsverläufe 28 in Echtzeit statt. Zur Darstellung wird ein gesamter Geschwindigkeitsbereich einer Farbskala zugeordnet, sodass jede Geschwindigkeit 56 mit einer spezifischen Farbe dargestellt wird. Bevorzugt ist jedem Pixel und/oder Bildteil eine Geschwindigkeit 56 zugewiesen.

Des Weiteren werden die Verschiebungsrichtungen 49 des Vektorfeldes 26 des jeweiligen Bildpaares 45 bevorzugt dazu verwendet, um Maschinenteile, wie zum Beispiel rotierende Haspel 7, zu erkennen und aus dem Geschwindigkeitsverlauf 54 auszublenden und aus den weiteren Berechnungen auszuschließen. Vorzugsweise wird dazu jeder Richtung ein Farbwert zugeordnet, vorzugsweise aus einem 360°-Farbraum. Die Verschiebungsrichtungen 49 jedes Vektorfeldes 26 können dann in einem Richtungsverlauf als Farbwerte analog dem Geschwindigkeitsverlauf 54 dargestellt werden (nicht dargestellt).

Des Weiteren werden bevorzugt in dem folgenden Schritt S3 Bildbereiche, die den Erntegutfluss 22 darstellen, in Regionen 57 eingeteilt. Vorzugsweise sind die Regionen 57 aneinander angrenzend. Im vorliegenden Beispiel ist der Erntegutfluss 22 in acht Regionen 57 aufgeteilt. Die Regionen 57 werden bevorzugt auf die Gutflussgeschwindigkeitsverläufe 28 übertragen.

Zudem wird vorzugsweise jeweils eine gemittelte Gutflussgeschwindigkeit 59 für jede Region 57 durch Mittelwertbildung aus den Gutflussgeschwindigkeiten 27 der jeweiligen Region 57 ermittelt. Bevorzugt wird dazu ein jeweils ein Median aus den Gutflussgeschwindigkeiten 27 der jeweiligen Region 57 ermittelt. Dazu wird vorzugsweise ein zeitlicher Gutflussgeschwindigkeitsverlauf 28 jeder gemittelten Gutflussgeschwindigkeit 59 der jeweiligen Region 57 mittels eines Filters, insbesondere eines Tiefpassfilters, geglättet. Die Mittelwertbildung erfolgt alternativ bevorzugt durch Berechnung eines arithmetischen Mittelwerts. Weiterhin alternativ erfolgt die Mittelwertbildung durch Berechnung von geometrischen, harmonischen, quadratischen und/oder kubischen Mittelwerts, und/oder gewichteten Mittelwerten.

Die Anzahl der Regionen 57 hängt vorzugsweise von den Abmessungen des Erntegutflusses 22, und somit indirekt von den Abmessungen der Erntegutbergungsvorrichtung 3, und/oder von einer erforderlichen lokalen Auflösung der gemittelten Gutflussgeschwindigkeiten 27 ab. Bevorzugt werden die Regionen 57 ab Werk festgelegt. Weiterhin bevorzugt werden verschiedene Erntegutbergungsvorrichtungen 3 automatisch erkannt und/oder können aus einer Liste manuell ausgewählt werden. Das Bildverarbeitungssystem 20 passt dabei Anzahl, Größe und Position der Regionen 57 vorzugsweise selbsttätig an. Bevorzugt greift es dazu auf eine Datenbank mit den erforderlichen Informationen zu. Alternativ oder zusätzlich kann der Fahrzeugführer die Regionen 57 manuell verändern.

Bevorzugt werden in dem folgenden Schritt S3 diskrete Gutflussgeschwindigkeitsverläufe 60 aus den gemittelten Gutflussgeschwindigkeiten 59 jeder Region 57 abgeleitet und bewertet. Bei den diskreten Gutflussgeschwindigkeitsverläufen 60 wird jeder Region 57 eine gemittelte Gutflussgeschwindigkeit 59 zugeordnet. Vorzugsweise werden die diskreten Gutflussgeschwindigkeitsverläufe 60 dem Fahrzeugführer visuell dargestellt. Weiterhin bevorzugt werden die gemittelten Gutflussgeschwindigkeiten 59 jeweils als Balken in einer schematischen Abbildung 61 der Erntegutbergungsvorrichtung 3 dargestellt. Vorzugsweise weist die schematische Abbildung 61 auch Grenzwerte 62 auf, die einen Gutstau und/oder eine Gutstauentstehung anzeigen. Bevorzugt sind die Grenzwerte 62 für eine Identifikation der Gutstauentstehung und/oder des Gutstaus voreingestellt und/oder durch den Fahrzeugführer festgelegt. Vorzugsweise werden die voreingestellten Grenzwerte 62 vom Hersteller eingestellt. Weiterhin bevorzugt sind die Grenzwerte 62 getreideartspezifisch und/oder feuchtespezifisch. Bevorzugt ist die Steuer- und Regeleinheit 29 auch dazu eingerichtet, bei Identifikation der Gutstauentstehung und/oder des Gutstaus Warnsignale für einen Fahrzeugführer zu generieren. Vorzugsweise sind die Warnsignale visuell und/oder akustisch. Bevorzugt ist eine Farbe der Balken abhängig von den gemittelten Gutflussgeschwindigkeiten 59. Die diskreten Gutflussgeschwindigkeitsverläufe 60 werden bevorzugt mittels der Datenausgabeeinheit 24 von dem Bildverarbeitungssystem 20 an eine Anzeigeeinheit (nicht dargestellt) in der Fahrzeugkabine 15 gesendet und dort dargestellt. Weiterhin bevorzugt werden die diskreten Gutflussgeschwindigkeitsverläufe 60 mittels der Datenausgabeeinheit 24 von dem Bildverarbeitungssystem 20 an die Steuer- und Regeleinheit 29 gesendet.

Erfindungsgemäß ist die Steuer- und Regeleinheit 29 dazu eingerichtet, eine bereichsweise Abnahme der Gutflussgeschwindigkeiten 27 und/oder der gemittelten Gutflussgeschwindigkeiten 59 zu identifizieren und als Gutstauentstehung zu interpretieren. Alternativ, jedoch nicht erfindungsgemäß, ist stattdessen das Bildverarbeitungssystem 3 dazu eingerichtet. Des Weiteren ist die Steuer- und Regeleinheit 29 erfindungsgemäß dazu eingerichtet, Regelmaßnahmen durchzuführen und den entstehenden Gutstau aufzulösen. Der entstehende Gutstau weist vorzugsweise eine signifikante Reduzierung der Gutflussgeschwindigkeiten 27 im Erntegutfluss 22 auf.

Bevorzugt umfassen die Regelmaßnahmen eine Reduktion der Fahrzeuggeschwindigkeit V1. Weiterhin bevorzugt umfassen die Regelmaßnahmen eine Reduktion der Erntegutfördergeschwindigkeit V2 der Erntegutfördervorrichtung 14. Vorzugsweise ist die Erntegutfördergeschwindigkeit V2 eine Umdrehungsgeschwindigkeit der Querförderschnecke 12. Weiterhin bevorzugt umfassen die Regelmaßnahmen eine Verschiebung V3 der Haspel 7. Dabei wird die Haspel 7 derart in ihrer Höhe und/oder nach vorne oder nach hinten verstellt, dass Teile von ihr in Bereiche des Erntegutflusses 22 mit identifizierter Gutstauentstehung eingreifen. Insbesondere umfassen die Teile der Haspel 7 die Haspelzinken.

Vorzugsweise ist die Steuer- und Regeleinheit 29 dazu eingerichtet, einen bereichsweisen Stillstand des Erntegutflusses 22 zu identifizieren und als Gutstau zu interpretieren. Des Weiteren ist die Steuer- und Regeleinheit 29 vorzugsweise dazu eingerichtet, weitere Regelmaßnahmen durchzuführen, den Gutstau aufzulösen. Bevorzugt umfassen die weiteren Regelmaßnahmen ein Stoppen oder ein Zurücksetzen der landwirtschaftlichen Arbeitsmaschine 1. Weiterhin bevorzugt umfassen die weiteren Regelmaßnahmen ein Heben der Erntegutbergungseinrichtung 3. Beim Heben der Erntegutbergungsvorrichtung 3 wird insbesondere eine Neigung der Erntegutbergungsvorrichtung 3 verändert. Der Gutstau ist vorzugsweise ein bereichsweiser Stillstand des Erntegutflusses 22. Der Gutstau liegt bevorzugt bei bereichsweisen Gutflussgeschwindigkeiten 27 und/oder mindestens einer gemittelten Gutflussgeschwindigkeit 59 von null oder nahe null Metern/Minute vor. Er kann jedoch auch als ein Erntegutfluss 22 mit bereichsweise niedrigen Gutflussgeschwindigkeiten 27 ausgebildet sein. Die Gutstauentstehung liegt hingegen bevorzugt vor, wenn Gutflussgeschwindigkeiten bereichsweise und/oder mindestens eine gemittelte Gutflussgeschwindigkeit, insbesondere signifikant, abnehmen.

Bevorzugt sendet die Steuer- und Regeleinrichtung 29 zur Steuerung der Haspel 7, der Erntegutfördervorrichtung 14 und/oder der Fahrzeuggeschwindigkeit V1, Steuersignale an die ihnen zugeordnete Stellglieder. Die Stellglieder können Ventile, Getriebe, Hydromotoren, Hydropumpen und/oder weitere Aktoren umfassen.

Es liegt zudem im Rahmen der Erfindung bei im Wesentlichen hohen gemittelten Gutflussgeschwindigkeiten 59, insbesondere bei maximalen gemittelten Gutflussgeschwindigkeiten 59, vorzugsweise die Fahrzeuggeschwindigkeit V1 zu erhöhen. Dadurch kann ein suboptimaler Erntegutfluss 22 der Erntegutbergungsvorrichtung 3 vermieden werden.

### Bezugszeichenliste

- 1: Landwirtschaftliche Arbeitsmaschine
- 2: Mähdrescher
- 3: Erntegutbergungsvorrichtung
- 4: Schneidwerksvorsatz
- 5: Schrägförderer
- 6: Schneidwerksgehäuse
- 7: Haspel
- 8: Erntegutaufnahmevorrichtung
- 9: Erntegut
- 10: Erntegutschneidvorrichtung
- 11: Erntebestand
- 12: Querförderschnecke
- 13: Ernteguteinzugsvorrichtung
- 14: Erntegutfördervorrichtung
- 15: Fahrzeugkabine
- 16: Kamera
- 17: Sensorsystem
- 19: Umfeld
- 20: Bildverarbeitungssystem
- 21: Erfassungsbereich
- 22: Erntegutfluss
- 23: Bilder
- 24: Datenausgabeeinheit
- 25: Optischer Fluss
- 26: Korrespondierendes Vektorfeld
- 27: Gutflussgeschwindigkeit
- 28: Gutflussgeschwindigkeitsverlauf
- 29: Steuer- und Regeleinheit
- 30: Bildsequenz
- 35: Intensitätsnormierung
- 36: Rauschreduktion
- 37: Schattenausblendung
- 38: Bildstabilisierung
- 39: Bildrotation
- 43: Erstes Bild eines Bildpaares
- 44: Zweites Bild eines Bildpaares
- 45: Bildpaar
- 46: Intensitätsmuster
- 47: Vektor
- 48: Verschiebungsbeträge
- 49: Verschiebungsrichtung
- 54: Geschwindigkeitsverlauf
- 55: Pyramidale Lukas-Kanade-Methode
- 56: Geschwindigkeit
- 57: Regionen
- 59: Gemittelte Gutflussgeschwindigkeit
- 60: Diskrete Gutflussgeschwindigkeitsverläufe
- 61: Schematische Abbildung der Erntegutbergungsvorrichtung
- 62: Grenzwert
- V1: Fahrzeuggeschwindigkeit
- V2: Erntegutfördergeschwindigkeit
- V3: Verschiebung der Haspel
- K2: Korrektur-Vektorfeld der zweiten Auflösungsebene
- K3: Korrektur-Vektorfeld der dritten Auflösungsebene
- K4: Korrektur-Vektorfeld der vierten Auflösungsebene
- L1: Erste Auflösungsebene
- L2: Zweite Auflösungsebene
- L3: Dritte Auflösungsebene
- L4: Vierte Auflösungsebene
- S1: Erster Schritt des Bildverarbeitungssystems
- S2: Zweiter Schritt des Bildverarbeitungssystems
- S3: Dritter Schritt des Bildverarbeitungssystems
- FR: Fahrtrichtung

## Patentansprüche

1. Landwirtschaftliche Arbeitsmaschine (1), insbesondere eine selbstfahrende Erntemaschine, mit einer Erntegutbergungsvorrichtung (3), die eine Erntegutschneidvorrichtung (10), eine Erntegutaufnahmevorrichtung (8) und/oder eine Ernteguteinzugsvorrichtung, und zumindest eine Erntegutfördervorrichtung (14) aufweist, und ein Bildverarbeitungssystem (20), eine Datenausgabeeinheit, und mindestens ein der Erntegutbergungsvorrichtung (3) zugeordnetes Sensorsystem (17) zur Erfassung eines Erntegutflusses (22) in der Erntegutbergungsvorrichtung (3) umfassend, wobei das Sensorsystem (17) zur Übertragung von den Bildern (23) an das Bildverarbeitungssystem (20) gekoppelt ist,
wobei die von dem Sensorsystem generierten Bilder an das Bildverarbeitungssystem übergeben werden,
wobei das Bildverarbeitungssystem (20) eine Auswahl verfügbarer Bilder (23) verarbeitet,
**dadurch gekennzeichnet, dass**
das Bildverarbeitungssystem (20) die übertragenden Bilder (23) in einem ersten Schritt (S1) vorverarbeitet,
das Bildverarbeitungssystem (20) dazu eingerichtet ist, in einem weiteren Schritt (S2) aus den vorverarbeiteten Bildern (23) einen optischen Fluss (25) und korrespondierende Vektorfelder (26) zu ermitteln, und
in dem weiteren Schritt (S2) zur Ermittlung des optischen Flusses (25) Positionsverschiebungen von Intensitätsmustern (46) zwischen den Bildern (43,44) mindestens eines Bildpaares (45) zu ermitteln,
wobei die Positionsverschiebungen Verschiebungsbeträge (48) und Verschiebungsrichtungen (49) umfassen, und
die Verschiebungsbeträge (48) und Verschiebungsrichtungen (49) der Intensitätsmuster (46) für jedes Bildpaar (45) jeweils als Vektoren (47) in dem korrespondierenden Vektorfeld (26), insbesondere in einer Matrix, des jeweiligen Bildpaares (45) zusammenzufassen,
und
das Bildverarbeitungssystem (20) dazu eingerichtet ist, in einem folgenden Schritt (S3) aus den korrespondierenden Vektorfeldern (26) Gutflussgeschwindigkeitsverläufe (28) des Erntegutflusses (22) abzuleiten und zu bewerten und die abgeleiteten und bewerteten Gutflussgeschwindigkeitsverläufe (28) anschließend an eine an das Bildverarbeitungssystem (20) gekoppelte Datenausgabeeinheit (24) zu übergeben,
die Datenausgabeeinheit (24) dazu eingerichtet ist, die abgeleiteten und bewerteten Gutgeschwindigkeitsverläufe (28) einer Steuer- und Regeleinheit (29) der landwirtschaftlichen Arbeitsmaschine (1) zur Verfügung zu stellen, wobei die Steuer- und Regeleinheit (29) dazu eingerichtet ist, eine bereichsweise Abnahme der Gutflussgeschwindigkeiten (27) und/oder der gemittelten Gutflussgeschwindigkeiten (59) zu identifizieren und als Gutstauentstehung zu interpretieren,
und den entstehenden Gutstau durch Durchführen von Regelungsmaßnahmen aufzulösen.

2. Landwirtschaftliche Arbeitsmaschine (1) nach Anspruch 1,
**dadurch gekennzeichnet, dass**
das zumindest eine Sensorsystem (17) eine Kamera (16) ist, wobei die Kamera (16) insbesondere als eine Monochromkamera (16) und/oder Farbkamera (16) ausgebildet ist.

3. Landwirtschaftliche Arbeitsmaschine (1) nach einem der vorhergehenden Ansprüche,
**dadurch gekennzeichnet, dass**
die Bilder (23) von der Erntegutbergungsvorrichtung (3) auch das angrenzende Umfeld (19) erfassen, wobei das angrenzende Umfeld (19) insbesondere einen Feldbereich in Fahrtrichtung (FR) vor der Erntegutbergungsvorrichtung (3) und/oder einen Feldbereich in Fahrtrichtung (FR) hinter der Erntegutbergungsvorrichtung (3) umfasst.

4. Landwirtschaftliche Arbeitsmaschine (1) nach einem der vorhergehenden Ansprüche,
**dadurch gekennzeichnet, dass**
das Bildverarbeitungssystem (20) eine, insbesondere der landwirtschaftlichen Arbeitsmaschine (1) zugeordnete, elektronische Recheneinheit ist, die Bilder (23) und/oder Bilddaten, die aus den Bildern (23) abgeleitet sind, elektronisch verarbeitet und auswertet.

5. Landwirtschaftliche Arbeitsmaschine (1) nach Anspruch 1,
**dadurch gekennzeichnet, dass**
jeweils zwei, insbesondere zwei aufeinanderfolgende, Bilder (43,44) einer Bildsequenz (30) zu einem Bildpaar (45) gruppierbar sind, eine Zeit zwischen den Bildern (43,44) des jeweiligen Bildpaares (45) erfasst wird und/oder vorgegeben ist, und jedes Bild (43,44) ein Intensitätsmuster (46) aufweist.

6. Landwirtschaftliche Arbeitsmaschine (1) nach Anspruch 1,
**dadurch gekennzeichnet, dass**
in dem ersten Schritt (S1) das Vorverarbeiten der Bilder (23) eine Intensitätsnormierung (35), eine Rauschreduktion (36), eine Schattenausblendung (37), eine Bildstabilisierung (38) und/oder eine Bildrotation (39) umfasst.

7. Landwirtschaftliche Arbeitsmaschine (1) nach Anspruch 1,
**dadurch gekennzeichnet, dass**
in dem weiteren Schritt (S2) der optische Fluss (25) und die korrespondierenden Vektorfelder (26) mittels einer differenziellen Methode berechnet werden, wobei bei der differenzielle Methode insbesondere durch Ableitung der Intensitätsmuster (46) jedes Bildes (23) jeweils eine Gradientenfunktion erzeugt wird, die Gradientenfunktionen beider Bilder (43,44) des jeweiligen Bildpaares (45) subtrahiert werden und eine resultierende Funktion die Verschiebungen der Intensitätsmuster (46) für das korrespondierende Vektorfeld (26) des Bildpaares (45) wiedergibt.

8. Landwirtschaftliche Arbeitsmaschine (1) nach Anspruch 7,
**dadurch gekennzeichnet, dass**
in dem weiteren Schritt (S2) die differentielle Methode eine Lucas-Kanade-Methode ist, bei der eine Gleichheit des optischen Flusses (25) in einer lokalen Umgebung eines Pixels eines Bildes, für den der optische Fluss (25) bestimmt wird, angenommen wird.

9. Landwirtschaftliche Arbeitsmaschine (1) nach Anspruch 8,
**dadurch gekennzeichnet, dass**
in dem weiteren Schritt (S2) die Lucas-Kanade-Methode eine pyramidale Lucas-Kanade-Methode (55) ist, bei der eine erste Bildauflösung der Bilder (43,44) jedes Bildpaares (45) zur Berechnung des optischen Flusses (25) und der korrespondierenden Vektorfelder (26) zu mindestens einer weiteren Bildauflösung reduziert wird und anschließend der optische Fluss (25) und die korrespondierenden Vektorfelder (26) berechnet und bei einer schrittweisen Wiederherstellung der ersten Bildauflösung iterativ korrigiert werden.

10. Landwirtschaftliche Arbeitsmaschine (1) nach dem Anspruch 1,
**dadurch gekennzeichnet, dass**
in dem folgenden Schritt (S3) Geschwindigkeiten (56) in den Bildern (23), insbesondere die Gutflussgeschwindigkeiten (27) des Erntegutflusses (22) in der Erntegutbergungsvorrichtung (3), aus den Verschiebungsbeträgen (48) des korrespondierenden Vektorfeldes (26) des jeweiligen Bildpaares (45) und der Zeit zwischen den Bildern (43,44) der jeweiligen Bildpaare (45) berechnet, und die Geschwindigkeitsverläufe (54), insbesondere die Gutflussgeschwindigkeitsverläufe (28) des Erntegutflusses (22), dargestellt werden.

11. Landwirtschaftliche Arbeitsmaschine (1) nach Anspruch 10,
**dadurch gekennzeichnet, dass**
in dem folgenden Schritt (S3) Bildbereiche, die den Erntegutfluss (22) darstellen, in Regionen (57) eingeteilt werden und jeweils eine gemittelte Gutflussgeschwindigkeit (59) für jede Region (57) durch Mittelwertbildung, insbesondere durch Bildung eines Medians, aus den Gutflussgeschwindigkeiten (27) der jeweiligen Region (57) ermittelt wird,
und diskrete Gutflussgeschwindigkeitsverläufe (60) aus den gemittelten Gutflussgeschwindigkeiten (59) jeder Region (57) abgeleitet werden und bewertet werden.

12. Landwirtschaftliche Arbeitsmaschine (1) nach einem der vorhergehenden Ansprüche,
**dadurch gekennzeichnet, dass**
die Erntegutaufnahmevorrichtung (8) eine Haspel (7) umfasst,
und die Regelmaßnahmen bei Gutstauentstehung
eine Reduktion einer Fahrzeuggeschwindigkeit (V1), und/oder
eine Reduktion einer Erntegutfördergeschwindigkeit (V2) der Erntegutfördervorrichtung (14), und/oder
eine Verschiebung (V3) der Haspel (7), sodass Teile von ihr, insbesondere Haspelzinken, in Bereiche des Erntegutflusses (22) mit identifizierter Gutstauentstehung eingreifen, umfassen.

13. Landwirtschaftliche Arbeitsmaschine (1) nach einem der vorhergehenden Ansprüche,
**dadurch gekennzeichnet, dass**
die Regelmaßnahmen ein Stoppen oder ein Zurücksetzen der landwirtschaftlichen Arbeitsmaschine (1), und/oder ein Heben der Erntegutbergungsvorrichtung (3) umfassen.

## Claims

1. An agricultural working vehicle (1), in particular a self-propelled harvesting machine, with a harvested material recovery device (3) which has a harvested material cutting device (10), a harvested material pickup device (8) and/or a harvested material intake device, and at least one harvested material feeding device (14), and an image processing system (20), a data output unit and comprising at least one sensor system (17) associated with the harvested material recovery device (3) for detecting a flow of harvested material (22) in the harvested material recovery device (3), wherein the sensor system (17) is coupled to the image processing system (20) in order to transfer the images (23),
wherein the images generated by the sensor system are transferred to the image processing system,
wherein the image processing system (20) processes a selection of available images (23),
**characterized in that**
the image processing system (20) pre-processes the transferred images (23) in a first step (51),
the image processing system (20) is configured to determine an optical flow (25) and corresponding vector fields (26) from the pre-processed images (23) in a further step (S2), and
in the further step (S2) for determining the optical flow (25), to determine positional shifts of intensity patterns (46) between the images (43, 44) of at least one image pair (45), wherein the positional shifts comprise shift values (48) and shift directions (49), and
to combine the shift values (48) and shift directions (49) of the intensity patterns (46) for each image pair (45) as respective vectors (47) in the corresponding vector field (26), in particular in a matrix, of the respective image pair (45),
and
in a subsequent step (S3), the image processing system (20) is configured to derive and assess material flow speed profiles (28) for the flow of harvested material (22) from the corresponding vector fields (26) and then to transfer the derived and assessed material flow speed profiles (28) to a data output unit (24) coupled to the image processing system (20),
the data output unit (24) is configured to make the derived and assessed material flow speed profiles (28) available to a control and regulation unit (29) of the agricultural working machine (1), wherein the control and regulation unit (29) is configured to identify a zonal reduction in the material flow speeds (27) and/or the averaged material flow speeds (59) and to interpret it as the occurrence of a material jam,
and to disperse the material jam which has occurred by implementing regulating measures.

2. The agricultural working machine (1) according to claim 1,
**characterized in that**
the at least one sensor system (17) is a camera (16), wherein in particular, the camera (16) is configured as a monochrome camera (16) and/or colour camera (16).

3. The agricultural working machine (1) according to one of the preceding claims,
**characterized in that**
the images (23) from the harvested material recovery device (3) also encompass the adjoining surrounding area (19), wherein in particular, the adjoining surrounding area (19) comprises a region of a field in front of the harvested material recovery device (3) in the direction of travel (FR) and/or a region of a field behind the harvested material recovery device (3) in the direction of travel (FR).

4. The agricultural working machine (1) according to one of the preceding claims,
**characterized in that**
the image processing system (20) is an electronic computing unit, in particular associated with the agricultural working machine (1), which electronically processes and evaluates images (23) and/or image data which are derived from the images (23).

5. The agricultural working machine (1) according to claim 1,
**characterized in that**
in each case, two, in particular two consecutive, images (43, 44) of an image sequence (30) can be grouped to form an image pair (45), a time between the images (43, 44) of the respective image pair (45) is determined and/or pre-specified, and each image (43, 44) has an intensity pattern (46).

6. The agricultural working machine (1) according to claim 1,
**characterized in that**
in the first step (S1), the pre-processing of the images (23) comprises intensity standardisation (35), noise reduction (36), shadow suppression (37), image stabilisation (38) and/or image rotation (39).

7. The agricultural working machine (1) according to claim 1,
**characterized in that**
in the further step (S2), the optical flow (25) and the corresponding vector fields (26) are computed by means of a differential method, wherein in the differential method, a respective gradient function is produced in particular by differentiation of the intensity pattern (46) of every image (23), the gradient functions of both images (43, 44) of the respective image pair (45) are subtracted and a resulting function reflects the shifts in the intensity pattern (46) for the corresponding vector field (26) of the image pair (45).

8. The agricultural working machine (1) according to claim 7,
**characterized in that**
in the further step (S2), the differential method is a Lucas-Kanade method in which the optical flow (25) in a local neighbourhood of a pixel of an image for which the optical flow (25) is determined is assumed to be constant.

9. The agricultural working machine (1) according to claim 8,
**characterized in that**
in the further step (S2), the Lucas-Kanade method is a pyramidal Lucas-Kanade method (55), in which a first image resolution of the images (43, 44) of each image pair (45) is reduced to at least one further image resolution for the calculation of the optical flow (25) and the corresponding vector fields (26) and then the optical flow (25) and the corresponding vector fields (26) are calculated and iteratively corrected in an incremental restoration of the first image resolution.

10. The agricultural working machine (1) according to claim 1,
**characterized in that**
in the following step (S3), speeds (56) in the images (23), in particular the material flow speeds (27) for the flow of harvested material (22) in the harvested material recovery device (3), are calculated from the shift values (48) for the corresponding vector field (26) for the respective image pair (45) and the time between the images (43, 44) of the respective image pair (45), and the speed profiles (54), in particular the material flow speed profiles (28) for the flow of harvested material (22), are depicted.

11. The agricultural working machine (1) according to claim 10,
**characterized in that**
in the following step (S3), image zones which depict the flow of harvested material (22) are divided into regions (57) and an averaged material flow speed (59) is respectively determined for each region (57) by averaging, in particular by producing a median, from the material flow speeds (27) for the respective region (57),
and discrete material flow speed profiles (60) are derived and assessed from the averaged material flow speeds (59) for each region (57).

12. The agricultural working machine (1) according to one of the preceding claims,
**characterized in that**
the harvested material pickup device (8) comprises a reel (7), and the regulating measures in the event of a material jam comprise
a reduction in a vehicle speed (V1), and/or
a reduction in a harvested material feeding speed (V2) of the harvested material feeding device (14), and/or
a displacement (V3) of the reel (7), so that parts of it, in particular reel tines, engage in regions of the flow of harvested material (22) with an identified material jam occurrence.

13. The agricultural working machine (1) according to one of the preceding claims,
**characterized in that**
the regulating measures comprise stopping or resetting the agricultural working machine (1) and/or lifting the harvested material recovery device (3).

## Revendications

1. Machine de travail agricole (1), en particulier une machine de récolte automotrice, comprenant un dispositif de ramassage de produit récolté (3), lequel comporte un dispositif de coupe de produit récolté (10), un dispositif de réception de produit récolté (8) et/ou un dispositif d'amenée de produit récolté, et au moins un dispositif de convoyage de produit récolté (14), et incluant un système de traitement d'images (20), une unité de sortie de données, et au moins un système de capteurs associé au dispositif de ramassage de produit récolté (3) pour détecter un flux de produit récolté (22) dans le dispositif de ramassage de produit récolté (3), le système de capteurs (17) étant couplé au système de traitement d'images (20) pour la transmission d'images (23),
les images générées par le système de capteurs étant transmises au système de traitement d'images
le système de traitement d'images (20) traitant une sélection d'images disponibles (23), **caractérisée en ce que**
dans une première étape (S1), le système de traitement d'images (20) prétraite les images transmises (23),
le système de traitement d'images (20) est agencé pour, dans une autre étape (S2), déterminer à partir des images prétraitées (23) un flux optique (25) et des champs vectoriels correspondants (26) et,
dans l'autre étape (S2), pour déterminer des déplacements positionnels de motifs d'intensité (46) entre les images (43, 44) au moins d'une paire d'images (45) afin de déterminer le flux optique (25),
les déplacements positionnels incluant des valeurs de déplacement (48) et des directions de déplacement (49), et
pour réunir les valeurs de déplacement (48) et directions de déplacement (49) des motifs d'intensité (46) pour chaque paire d'images (45) respectivement comme vecteurs (47) dans le champ vectoriel correspondant (26), en particulier dans une matrice, de la paire d'images respective (45),
et le système de traitement d'images (20) étant agencé pour, dans une étape suivante (S3), déduire et analyser des champs vectoriels correspondants (26) des variations de vitesse d'écoulement de produit (28) du flux de produit récolté (22) et pour transmettre ensuite les variations de vitesse d'écoulement de produit déduites et analysées (28) à une unité de sortie de données (24) couplée au système de traitement d'images (20),
l'unité de sortie de données (24) étant agencée pour fournir les variations de vitesse de produit déduites et analysées (28) à une unité de commande et de régulation (29) de la machine de travail agricole (1), l'unité de commande et de régulation (29) étant agencée pour identifier une diminution par zones des vitesses d'écoulement de produit (27) et/ou des vitesses d'écoulement de produit moyennées (59) et pour l'interpréter comme la survenue d'un bourrage de produit,
et pour supprimer le bourrage de produit survenu en mettant en œuvre des mesures de régulation.

2. Machine de travail agricole (1) selon la revendication 1, **caractérisée en ce que** le au moins un système de capteurs (17) est une caméra (16), la caméra (16) étant conformée en particulier en caméra monochrome (16) et/ou en caméra couleur (16).

3. Machine de travail agricole (1) selon une des revendications précédentes, **caractérisée en ce que** les images (23) détectent aussi l'environnement adjacent (19) du dispositif de ramassage de produit récolté (3), l'environnement adjacent (19) incluant en particulier une zone de champ dans le sens de la marche (FR) devant le dispositif de ramassage de produit récolté (3) et/ou une zone de champ dans le sens de la marche (FR) derrière le dispositif de ramassage de produit récolté (3).

4. Machine de travail agricole (1) selon une des revendications précédentes, **caractérisée en ce que** le système de traitement d'images (20) est une unité de calcul électronique qui est en particulier associée à la machine de travail agricole (1) et qui traite et analyse électroniquement des images (23) et/ou des données d'image qui sont dérivées des images (23) .

5. Machine de travail agricole (1) selon la revendication 1, **caractérisée en ce que** respectivement deux images, en particulier successives, (43, 44) d'une séquence d'images (30) peuvent être groupées en une paire d'images (45), une durée entre les images (43, 44) de la paire d'images respective (45) est détectée et/ou prescrite, et chaque image (43, 44) comporte un motif d'intensité (46).

6. Machine de travail agricole (1) selon la revendication 1, **caractérisée en ce que**, dans une première étape (S1), le prétraitement des images (23) inclut une normation d'intensités (35), une réduction de bruit (36), une suppression des ombres (37), une stabilisation d'image (38) et/ou une rotation d'image (39).

7. Machine de travail agricole (1) selon la revendication 1, **caractérisée en ce que**, dans une autre étape (S2), le flux optique (25) et les champs vectoriels correspondants (26) sont calculés au moyen d'une méthode différentielle, avec la méthode différentielle étant générée respectivement une fonction de gradient, en particulier par déduction des motifs d'intensité (46) de chaque image (23), les fonctions de gradient des deux images (43, 44) de la paire d'images respective (45) étant soustraites et une fonction résultante restituant les déplacements des motifs d'intensité (46) pour le champ vectoriel correspondant (26) de la paire d'images (45) .

8. Machine de travail agricole (1) selon la revendication 7, **caractérisée en ce que**, dans l'autre étape (S2), la méthode différentielle est une méthode de Lucas-Kanade, dans laquelle on admet une égalité du flux optique (25) dans un environnement local d'un pixel d'une image pour lequel le flux optique (25) est déterminé.

9. Machine de travail agricole (1) selon la revendication 8, **caractérisée en ce qu** e, dans l'autre étape (S2), la méthode de Lucas-Kanade est une méthode de Lucas-Kanade pyramidale (55) dans laquelle une première définition d'image des images (43, 44) de chaque paire d'images (45) est réduite à au moins une autre définition d'image pour le calcul du flux optique (25) et des champs vectoriels correspondants (26) et ensuite le flux optique (25) et les champs vectoriels correspondants (26) sont calculés et, en cas de recomposition graduelle de la première définition d'image, corrigés de manière itérative.

10. Machine de travail agricole (1) selon la revendication 1, **caractérisée en ce que**, dans l'étape suivante (S3), des vitesses (56) sont calculées dans les images (23), en particulier les vitesses d'écoulement de produit (27) du flux de produit récolté (22) dans le dispositif de ramassage de produit récolté (3), à partir des valeurs de déplacement (48) du champ vectoriel correspondant (26) de la paire d'images respective (45) et de la durée entre les images (43, 44) de la paire d'images respective (45), et les variations de vitesse (54), en particulier les variations de vitesse d'écoulement de produit (28) du flux de produit récolté (22) sont représentées.

11. Machine de travail agricole (1) selon la revendication 10, **caractérisée en ce que**, dans l'étape suivante (S3), des secteurs d'images qui représentent le flux de produit récolté (22) sont divisés en zones (57) et une vitesse d'écoulement de produit moyennée (59) est déterminée respectivement pour chaque zone (57) par moyennage, en particulier par formation d'une médiane, à partir des vitesses d'écoulement de produit (27) de la zone respective (57), et des variations discrètes de vitesse d'écoulement de produit (60) sont déduites des vitesses d'écoulement de produit moyennées (59) de chaque zone (57) et sont analysées.

12. Machine de travail agricole (1) selon une des revendications précédentes, **caractérisée en ce que** le dispositif de réception de produit récolté (8) inclut un rabatteur (7),
et les mesures de régulation en cas de survenue d'un bourrage de produit incluent une réduction d'une vitesse de véhicule (V1) et/ou
une réduction de la vitesse de convoyage de produit récolté (V2) du dispositif de convoyage de produit récolté (14), et/ou
un déplacement (V3) du rabatteur (7), de sorte que des parties de celui-ci, en particulier des doigts rabatteurs, interviennent dans des zones du flux de produit récolté (22) avec une survenue identifiée d'un bourrage de produit.

13. Machine de travail agricole (1) selon une des revendications précédentes, **caractérisée en ce que** les mesures de régulation incluent un arrêt ou une réinitialisation de la machine de travail agricole (1), et/ou un levage du dispositif de ramassage de produit récolté (3).
